**Europäisches Patentamt**

**European Patent Office**

**Office européen des brevets**

(19)

(11) **EP 1 478 110 A1**

(12) **EUROPEAN PATENT APPLICATION**

(43) Date of publication:
**17.11.2004 Bulletin 2004/47**

(51) Int Cl.$^7$: **H04B 10/24**

(21) Application number: **03252806.9**

(22) Date of filing: **03.05.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(71) Applicant: **Aston Photonic Technologies Ltd.**<br>**Birmingham B7 4BB (GB)**<br><br>(72) Inventors:<br>• **Lai, Yicheng, Electronic Engineering**<br>**Birmingham B4 7ET (GB)** | • **Zhang, Wei, Electronic Engineering**<br>**Birmingham B4 7ET (GB)**<br>• **Williams, John Arthur, Electronic Engineering**<br>**Birmingham B4 7ET (GB)**<br>• **Bennion, Ian, Electronic Engineering**<br>**Birmingham B4 7ET (GB)**<br><br>(74) Representative: **Chapman, Helga Claire**<br>**Chapman Molony**<br>**Renshaw Barns**<br>**Upper Woodford**<br>**Salisbury SP4 6FA (GB)** |

(54) **Bi-directional non-reciprocal optical filter and optical devices incorporating it**

(57)    A bi-directional, non-reciprocal optical filter 10, comprising a transversal filter 12, two polarising beam splitters 14, 16, a Faraday rotator 18, and a photodetector 20. The transversal filter 12 comprises two two polarisation, high-birefringence (Hi-Bi) optical fibres 22, 24, and three polarisation state controllers 26, 28, 30 for rotating the polarisation state of a received optical signal by an angle of $\theta_1$, $\theta_2$ and $\theta_3$ respectively. An optical signal input into port 1 is polarised in one polarisation state on leaving the first polarising beam splitter 14. Trans-mission through the Faraday rotator 18 and the first Hi-Bi fibre 22 causes the optical signal to degenerate into two orthogonally polarised modes (x, y). These modes (x, y) are coupled into the second Hi-Bi fibre 24, where each mode (x, y) degenerates into two orthogonally polarised modes, resulting in four degenerated polarised modes ($x_s$, $x_p$, $y_s$, $y_p$). These four modes ($x_s$, $x_p$, $y_s$, $y_p$) are coupled into each axis of the polarising beam splitter 16, forming four signal taps in each axis. The taps in the slow axis are coherently combined by the photodetector 20 to form the output of the filter 10 at port 2.

Figure 1

Printed by Jouve, 75001 PARIS (FR)

**Description**

The invention relates to a bi-directional, non-reciprocal optical filter and to an optical circulator and an optical isolator incorporating the filter.

Wavelength-interleaved bi-directional transmission in wavelength division multiplexed (WDM) optical transmission systems provides many advantages over unidirectional transmission. It reduces both the number of optical fibre links required in a transmission system and the nonlinear effects between wavelength adjacent optical channels. However, in known bidirectional transmission systems the transmitted optical signal can degrade drastically due to back reflections caused by processes such as Brillouin scattering and Rayleigh backscattering. For example, the maximum gain of a bidirectional Erbium doped fibre amplifier (EDFA) is limited to ~19dB due to the relatively high intensity noise caused by Rayleigh backscattering.

The need for enabling technology for bidirectional transmission has been subject of interest recently. The two key fields of research are: wavelength interleavers having directional isolation for optical channels propagating in opposite directions; and bidirectional amplifiers that are not limited by backscattering or optical reflections. A 4-port interleaver and a bidirectional circulator based on Lyot-Ohman optical filters have been demonstrated. In order to achieve a multi-passband, non-reciprocal wavelength-interleaved transfer function, these devices are based on a series of fixed-length, bulk optic birefringent crystals. Other proposed optical architectures for realizing such a non-reciprocal wavelength-selective device include the adaptation of a polarization independent isolator. By including a wavelength-dependent phase retarder in the optical isolator architecture, a bidirectional non-reciprocal wavelength-interleaved notch filter is achieved.

Most proposed techniques to date use various configurations of bulk optic components, with micro-lenses being required for input and output coupling of light to and from the optical fibres of the transmission system. The operation bandwidth and the wavelength transfer response of these devices are limited by the dispersion characteristics of the bulk optic crystal materials used. In addition, critical alignment of the optical components is required in order to minimize insertion loss, and the transfer characteristics of the devices are not easily reconfigurable.

According to a first aspect of the present invention there is provided a bi-directional non-reciprocal optical filter comprising:

an optical waveguide transversal filter comprising:

first and second sections of two polarisation, polarisation maintaining optical waveguide having first and second lengths respectively; and
first, second and third polarisation state control means for setting the orientation of the or each polarisation state of a received optical signal at an angle $\theta_1$, $\theta_2$ and $\theta_3$ respectively with respect to the polarisation axes of the subsequent optical component,
the output of the first polarisation state control means being coupled to one end of the first section of waveguide, the second polarisation state control means being coupled between the other end of the first section of waveguide and one end of the second section of waveguide, and the input of the third polarisation state control means being coupled to the other end of the second section of waveguide,

wherein the transversal filter converts an input optical signal into a series of optical signal taps;
first and second polarisation splitters each having on one side a first, common port for optical signals of one or both of first and second orthogonally polarised states, and on the other side a second port for optical signals of the first polarisation state and a third port for optical signals of the second polarisation state,
the first port of the second polarisation splitter being coupled to the output of the third polarisation state control means;
a Faraday rotator coupled between the first port of the first polarisation splitter and the input of the first polarisation state control means; and means for coherently combining a series of optical signal taps, its input being coupled to one of the second and third ports of the first and second polarisation splitters, and its output forming an output of the optical filter.

The optical waveguide transversal filter may comprise one or more additional sections of two polarisation, polarisation maintaining optical waveguide, with an additional polarisation state control means being provided for each additional section of waveguide. Each section of two polarisation, polarisation maintaining optical waveguide is preferably of a different length. The angles $\theta_1$, $\theta_2$ and $\theta_3$ may be variable, in order enable the spectral response of the optical filter to be changed.

The two polarisation, polarisation maintaining optical waveguide is preferably a two polarisation high birefringence optical waveguide, and is most preferably two polarisation high birefringence optical fibre. The two polarisation high birefringence optical waveguide may be a rare-earth doped two polarisation high birefringence optical waveguide, such as polarisation maintaining Erbium doped optical fibre.

The Faraday rotator is preferably a fibre pig-tailed Faraday rotator. The Faraday rotator may alternatively comprise an all-fibre Faraday rotator.

The first and second polarisation splitters are preferably fibre pig-tailed polarisation splitters, such as fibre pig-tailed polarising beam splitters. The first and second polarisation splitters may alternatively comprise all-fibre polarisation splitters, such as birefringent splittable composite optical fibre.

One or more polarisation state control means may comprise apparatus for rotatably butt-coupling two optical fibre ends. One or more polarisation state control means may alternatively comprise a section of two polarisation, polarisation maintaining optical fibre located within apparatus for compressing the section of fibre, compression of the fibre causing rotation of the polarisation state or states of an optical signal propagating through the fibre. One or more polarisation state control means may further alternatively comprise a rocking filter.

The sections of two polarisation, polarisation maintaining optical waveguide may comprise subsequent sections of a single length of two polarisation, polarisation maintaining optical waveguide.

The means for coherently combining a series of optical signal taps preferably comprises square-law optical detection means, such as a photodetector.

According to a second aspect of the present invention there is provided an optical circulator comprising:

a bi-directional non-reciprocal optical filter according to the first aspect of the invention;
a first optical reflector coupled to one of the second and third ports of one of the first and second polarisation splitters,
the input of the means for coherently combining a series of optical signal taps being coupled to the other one of the second and third ports of said polarisation splitter; and
a second optical reflector coupled to one of the second and third ports of the other one of the first and second polarisation splitters,
the other of the second and third ports of said polarisation splitter forming the input to the circulator.

The optical reflector preferably comprises an optical waveguide grating, and may be a fibre Bragg grating. The optical reflector may alternatively comprise a bulk optic reflector. The optical reflector may further alternatively comprise a polarisation maintaining optical waveguide loop.

According to a third aspect of the present invention there is provided an optical isolator comprising:

a bi-directional non-reciprocal optical filter according to the first aspect of the invention; a second optical waveguide transversal filter comprising:

first and second sections of two polarisation, polarisation maintaining optical waveguide having first and second lengths respectively; and
first, second and third polarisation state control means for setting the orientation of the or each polarisation state of a received optical signal at an angle $\theta_i$, $\theta_2$ and $\theta_3$ respectively with respect to the polarisation axes of the subsequent optical component,
the output of the first polarisation state control means being coupled to one end of the first section of waveguide, the second polarisation state control means being coupled between the other end of the first section of waveguide and one end of the second section of waveguide, and the input of the third polarisation state control means being coupled to the other end of the second section of waveguide,

wherein the transversal filter converts an input optical signal into a series of optical signal taps;
third and fourth polarisation splitters each having on one side a first, common port for optical signals of one or both of first and second orthogonally polarised states, and on the other side a second port for optical signals of the first polarisation state and a third port for optical signals of the second polarisation state; and
a second Faraday rotator coupled between the first port of the third polarisation splitter and the input of the first polarisation state control means of the second optical waveguide transversal filter,
one of the second and third ports of one of the first and second polarisation splitters being coupled to a corresponding one of the second and third ports of one of the third and fourth polarisation splitters,
the input of the means for coherently combining a series of optical signal taps of the bi-directional non-reciprocal optical filter being coupled to one of the second and third ports on the other side of the other one of the first and second polarisation splitters or of the other one of the third and fourth polarisation splitters,
and the output of the means for coherently combining a series of optical signal taps forming the output of the isolator.

The second optical waveguide transversal filter may comprise one or more additional sections of two polarisation, polarisation maintaining optical waveguide, with an additional polarisation state control means being provided for each additional section of waveguide. Each section of two polarisation, polarisation maintaining optical waveguide is preferably of a different length. The angles $\theta_1$, $\theta_2$ and $A_3$ may be variable, in order enable the spectral response of the optical filter to be changed.

The two polarisation, polarisation maintaining optical waveguide of the second optical waveguide transversal filter is preferably a two polarisation high birefringence optical waveguide, and is most preferably two polarisation high birefringence optical fibre. The two polarisation high birefringence optical fibre may be a rare-earth doped two polarisation high birefringence optical fibre, such as polarisation maintaining Erbium doped optical fibre.

The second Faraday rotator is preferably a fibre pig-tailed Faraday rotator. The second Faraday rotator may alternatively comprise an all-fibre Faraday rotator.

The third and fourth polarisation splitters are preferably fibre pig-tailed polarisation splitters, such as fibre pig-tailed polarising beam splitters. The third and fourth polarisation splitters may alternatively comprise all-fibre polarisation splitters, such as birefringent splittable composite optical fibre.

One or more polarisation state control means of the second optical waveguide transversal filter may comprise apparatus for rotatably butt-coupling two optical fibre ends. One or more polarisation state control means of the second optical waveguide transversal filter may alternatively comprise a section of two polarisation, polarisation maintaining optical fibre located within apparatus for compressing the section of fibre, compression of the fibre causing rotation of the polarisation state or states of an optical signal propagating through the fibre. One or more polarisation state control means of the second optical waveguide transversal filter may further alternatively comprise a rocking filter.

The sections of two polarisation, polarisation maintaining optical waveguide within the second optical waveguide transversal filter may comprise subsequent sections of a single length of two polarisation, polarisation maintaining optical waveguide.

Specific embodiments of the invention will now be described in detail, by way of example only, with reference to the accompanying drawings, in which:

Figure 1 is a schematic representation of a bi-directional, non-reciprocal optical filter according to a first embodiment of the invention;

Figure 2(a) is a diagrammatic cross-sectional view through the first section of hi-bi fibre of the optical filter of Fig. 1, showing the degeneration of an input linearly polarised optical signal into the orthogonal polarisation states supported by the first hi-bi fibre;

Figure 2(b) is a diagrammatic cross-sectional view through the second section of hi-bi fibre of the optical filter of Fig.1, showing the degeneration of each polarisation state output from the first hi-bi fibre into the orthogonal polarisation states supported by the second hi-bi fibre;

Figure 2(c) is a diagrammatic cross-sectional view through the second polarisation splitter of the optical filter of Fig.1, showing the degeneration of each polarisation state output from the second hi-bi fibre into the orthogonal polarisation states supported by the polarisation splitter;

Figure 3(a) is a diagrammatic cross-sectional view through the second section of hi-bi fibre of the optical filter of Fig.1, showing the degeneration of an input linearly polarised optical signal into the orthogonal polarisation states supported by the second hi-bi fibre;

Figure 3(b) is a diagrammatic cross-sectional view through the first section of hi-bi fibre of the optical filter of Fig. 1, showing the degeneration of each polarisation state output from the second hi-bi fibre into the orthogonal polarisation states supported by the first hi-bi fibre;

Figure 3(c) is a diagrammatic cross-sectional view through the first polarisation splitter of the optical filter of Fig. 1, showing the degeneration of each polarisation state output from the first hi-bi fibre into the orthogonal polarisation states supported by the polarisation splitter;

Figure 4(a) illustrates the complementary filter responses in the forward direction between ports 1 and 2 and ports 1 and 4 of the optical filter of Fig.1;

Figure 4(b) illustrates the complementary filter responses in the reverse direction between ports 2 and 1 and ports 2 and 3 of the optical filter of Fig.1;

Figure 5(a) shows the measured and theoretical forward and reverse filter responses between port 1 and port 2 of the optical filter of Fig. 1, for $\theta_1$=45º; $\theta_2$=0º and $\theta_3$=45º;

Figure 5(b) shows the measured and theoretical forward and reverse filter responses between port 1 and port 2 of the optical filter of Fig. 1, for $\theta_1$=45º; $\theta_2$90º and $\theta_3$=45º;

Figure 6 shows the measured and theoretical forward and reverse filter responses between port 1 and port 2 of the optical filter of Fig. 1, for $\theta_1$=15º; $\theta_2$=58º and $\theta_3$=45º;

Figure 7 is a schematic representation of a bi-directional, non-reciprocal optical filter according to a second embodiment of the invention;

Figure 8 shows the measured forward and reverse filter responses between port 1 and port 2 of the optical filter of Fig.7;

Figure 9 is a schematic representation of an optical circulator according to a third embodiment of the invention; and

Figure 10 is a schematic representation of an optical isolator according to a fourth embodiment of the invention.

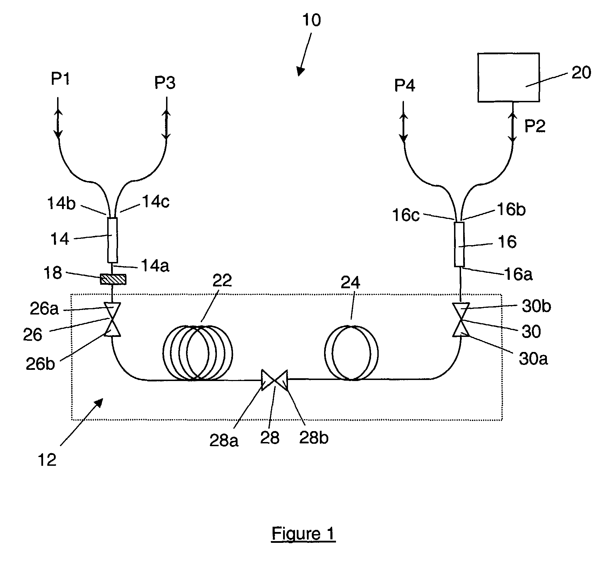

Referring to Fig. 1, a first embodiment of the invention provides a bi-directional, non-reciprocal wavelength interleaving optical filter 10 comprising a wavelength-selective transversal filter 12, two polarisation splitters, in the form of first and second fibre pigtailed, polarising beam splitters 14, 16, a fibre pigtailed 45° Faraday rotator 18, and means for coherently combining a series of optical signal taps, in the form of an photodetector 20, which in this example is provided within an optical spectrum analyser (OSA) (not shown).

Each polarising beam splitter 14, 16 has a first port 14a, 16a on one side, and a second port 14b, 16b and third port 14c, 16c on the other side. The first port 14a, 16a on each polarising beam splitter 14, 16 is a common port, for receiving/outputting optical signals of one or both of two orthogonal polarisation states (corresponding to the fast and slow axes of the Hi-Bi fibre). The second port 14b, 16b on each polarising beam splitter 14, 16 is for receiving/outputting optical signals of one polarisation state (slow axis) and the third port 14c, 16c on each polarising beam splitter 14, 16 is for receiving/outputting optical signals of the orthogonal polarisation state (fast axis). Each port 14a, 14b, 14c and 16a, 16b, 16c is provided with a fibre pigtail of polarisation maintaining optical fibre. The second 14b, 16b and third 16b, 16c ports on the polarising beam splitters 14, 16 are designated as the first (P1), second (P2), third (P3) and fourth (P4) ports of the optical filter 10, with a photodetector 20 being coupled to the or each port 14b, 16b, 14c, 16c which forms an output of the optical filter 10.

The first port 14a of the first polarising beam splitter 14 is coupled to one side of the Faraday rotator 18 by fusion splicing the respective fibre pigtails together.

The transversal filter 12 comprises two sections of two polarisation, polarisation maintaining optical waveguide, in the form of first and second two polarisation, high-birefringence (Hi-Bi) optical fibres 22, 24, and three polarisation state controllers 26, 28, 30. The first Hi-Bi fibre 22 has a length of 4.45m and the second Hi-Bi fibre 24 has a length of 2.225m.

Each polarisation state controller 26, 28, 30 comprises first and second optical fibre adapters 26a, 26b, 28a, 28b, 30a, 30b mounted for translation and rotation relative to one another. By appropriate translation and rotation of one or both fibre adapters, two optical fibres held in respective fibre adapters are butt-coupled to one another, and the or each polarisation state of a received optical signal in the first fibre is rotated by an angle of $\theta_1$, $\theta_2$ and $\theta_s$ respectively with respect to the polarisation axes of the second optical fibre.

The first polarisation state controller 26 is coupled between the other side of the Faraday rotator 18 and one end of the first Hi-Bi fibre 22: the fibre pigtail on the other side of the Faraday rotator 18 is held in the first fibre adapter 26a and the first Hi-Bi fibre 22 is held in the second fibre adapter 26b. The second polarisation state controller 28 is coupled between the other end of the first Hi-Bi fibre 22 and one end of the second Hi-Bi fibre 24: the first Hi-Bi fibre 22 is held in the first fibre adapter 28a and the second Hi-Bi fibre 24 is held in the second fibre adapter 28b. The third polarisation state controller 30 is coupled between the other end of the second Hi-Bi fibre 24 and first, common port 16a of the second polarising beam splitter 16: the second Hi-Bi fibre 24 is held in the first fibre adapter 30a and the fibre pigtail from the first port 16a of the polarising beam splitter 16 is held in the second fibre adapter 30b.

In operation, an optical signal propagating from port 1 to port 2/4 (forward direction) undergoes the following optical processing. Port 1 only supports optical signals of one polarisation state (slow), and therefore acts as a polarizer in respect of input optical signals. As a result, an optical signal input through port 1 will be polarised in one polarisation state (slow) when it leaves the first polarising beam splitter 14 through its common port 14a.

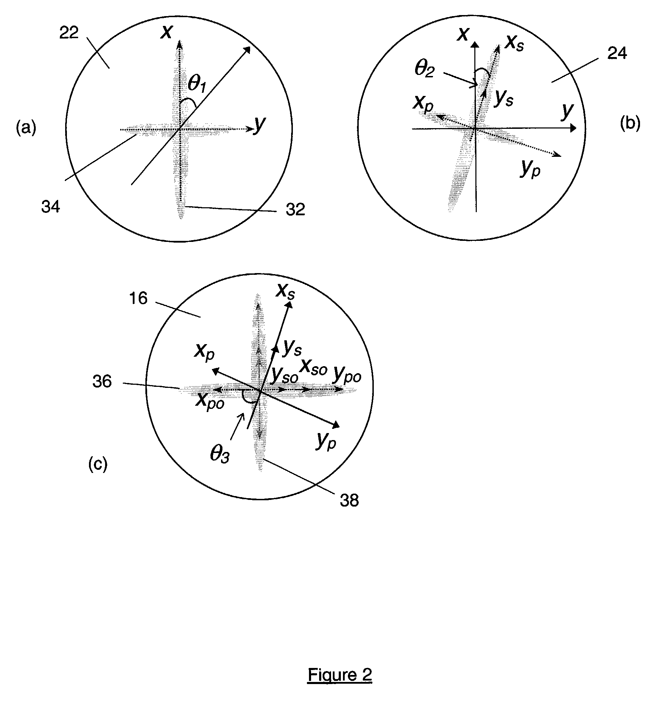

Transmission through the Faraday rotator 18 causes the polarisation state of the optical signal to rotate by 45°. The optical signal is then launched into the first Hi-Bi fibre 22, via the first polarisation state controller 26, at an angle $\theta_1$ with respect to the birefringent (fast and slow) axes of the first Hi-Bi fibre 22, as illustrated in Fig. 2(a). When it is launched into the first Hi-Bi fibre 22, the input optical signal (solid arrow Fig. 2(a)) degenerates into two orthogonally polarised modes (x, y) (dashed arrows Fig 2(a)), which propagate along the fast axis 32 and the slow axis 34 of the fibre 22 respectively.

The two orthogonally polarised modes (x, y) are then coupled into the second Hi-Bi fibre 24, via the second polarisation state controller 28, at an angle $\theta_2$ with respect to the birefringent axes of the second Hi-Bi fibre 24, as illustrated in Fig. 2(b). Each of the two modes (x, y) (solid arrows Fig 2(b)) launched into the second Hi-Bi fibre 24 degenerates into two orthogonally polarised modes, resulting in four degenerated polarised modes $(x_s, x_p, y_s, y_p)$ (dashed arrows Fig 2(b)) propagating within the second Hi-Bi fibre 24.

The four degenerated polarised modes $(x_s, x_p, y_s, y_p)$ are then coupled into the second polarising beam splitter 16, via the third polarisation state controller 30, at an angle $\theta_3$ with respect to the birefringent axes (fast and slow) of the second polarising beam splitter 16, as illustrated in Fig.2(c). The four degenerated polarised modes $(x_s, x_p, y_s, y_p)$ (solid arrows Fig 2(c)) are each coupled into each of the fast 36 and slow 38 axes of the polarising beam splitter 16, to form four signal taps $x_{so}$, $x_{po}$, $y_{so}$ and $y_{po}$ (dashed bold arrows Fig 2(c)), and $x_{se}$, $x_{pe}$, $y_{se}$ and $y_{pe}$ (dashed faint arrows Fig 2(c)) propagating in each of the slow and fast axes respectively.

It is these signal taps which subsequently determine the transfer characteristics of the optical filter 10 at a selected output port. The signal taps $x_{so}$, $x_{po}$, $y_{so}$ and $y_{po}$ propagating in the slow axis 36 of the polarising beam splitter 16 are combined by the photodetector 20 to form the output of the filter 10 at port 2. Similarly, the signal taps $x_{se}$, $x_{pe}$, $y_{se}$ and $y_{pe}$ propagating in the fast axis 38 can be coherently combined by suitable means (not shown) to form the output of the filter at port 4.

By using a Hi-Bi fibre length ratio of 2:1, the 4 resultant output signal taps propagating in each axis 36, 38 of the second polarising beam splitter 16 are temporally spaced evenly by a time period $\tau_0$ to yield a 4-tap optical transversal filter response. The time delay $\tau$ between adjacent optical taps propagating in a Hi-Bi fibre section of length $L$ and birefringence $\Delta n$, can be expressed as

$$\tau = \frac{\Delta n \cdot L}{c}$$

where $c$ is the speed of light. The resultant $\tau_0$ at the selected output port determines the free spectral range (FSR), $1/\tau_0$, of the optical filter 10 at that output port.

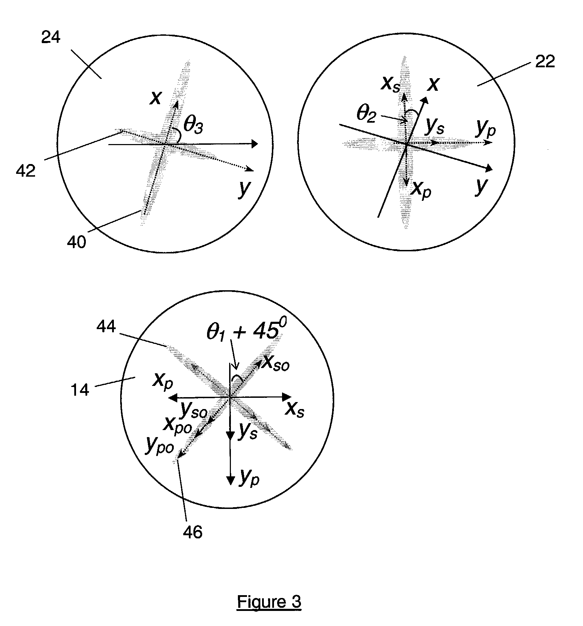

In the reverse direction operation, from port 2 to port 1/3, similar polarisation degeneration of the light input at port 2 occurs, as illustrated in Figs 3(a)-(c). Port 2 only supports optical signals of one polarisation state (slow), and therefore acts as a polarizer in respect of input optical signals. As a result, an optical signal input through port 2 will be polarised in one polarisation state (slow) when it leaves the second polarising beam splitter 16 through its common port 16a.

The optical signal is then launched into the second Hi-Bi fibre 24, via the third polarisation state controller 30, at an angle $\theta_3$ with respect to the birefringent (fast and slow) axes of the second Hi-Bi fibre 24, as illustrated in Fig. 3 (a). When it is launched into the second Hi-Bi fibre 24, the input optical signal (solid arrow Fig. 3(a)) degenerates into two orthogonally polarised modes (x, y) (dashed arrows Fig 3(a)), which propagate along the fast axis 40 and the slow axis 42 of the fibre 24 respectively.

The two orthogonally polarised modes (x, y) are then coupled into the first Hi-Bi fibre 22, via the second polarisation state controller 28, at an angle $\theta_2$ with respect to the birefringent axes of the first Hi-Bi fibre 22, as illustrated in Fig. 3(b). Each of the two modes (x, y) (solid arrows Fig 3(b)) launched into the first Hi-Bi fibre 22 degenerates into two orthogonally polarised modes, resulting in four degenerated polarised modes $(x_s, x_p, y_s, y_p)$ (dashed arrows Fig 3 (b)) propagating within the first Hi-Bi fibre 22.

On exiting the first Hi-Bi fibre 22 the four degenerated polarised modes $(x_s, x_p, y_s, y_p)$ are coupled into the Faraday rotator 18 at an angle $\theta_1$, via the first polarisation state controller 26. Transmission through the Faraday rotator 18 causes the polarisation state of each mode to rotate by 45°. The Faraday rotator 18 therefore effectively rotates the polarisation of an optical signal by 90° when propagating in reverse direction (port 2→port 1/3). The four degenerated polarised modes are then coupled into first polarising beam splitter 14, at an angle $\theta_1 + 45°$ with respect to the birefringent axes (fast and slow) of the first polarising beam splitter 14, as illustrated in Fig.3(c). The four degenerated polarised modes $(x_s, x_p, y_s, yp)$ (solid arrows Fig 3(c)) are each coupled into each of the fast 44 and slow 46 axes of the polarising beam splitter 14, to form four signal taps $x_{so}$, $x_{po}$, $y_{so}$ and $y_{po}$ (dashed bold arrows Fig 3(c)), and $x_{se}$, $x_{pe}$, $y_{se}$ and $y_{pe}$ (dashed faint arrows Fig 3(c)) propagating in each of the slow and fast axes respectively. The signal taps are coherently combined by suitable means (not shown) to form the output of the filter 10 at port 1 and port 3 respectively.

The amplitudes of the degenerated polarised modes transmitted to a selected output port can be altered by

varying angles $\theta_1$, $\theta_2$ and $\theta_3$. For example, the normalised amplitude of the electric fields at port 1 and port 2 are

$$\begin{bmatrix} \cos\theta_1 \cdot \cos\theta_2 \\ -\cos\theta_1 \cdot \sin\theta_2 \\ \sin\theta_1 \cdot \sin\theta_2 \\ \sin\theta_1 \cdot \cos\theta_2 \end{bmatrix} \quad and \quad \begin{bmatrix} -\sin\theta_1 \cdot \cos\theta_2 \\ \sin\theta_1 \cdot \sin\theta_2 \\ \cos\theta_1 \cdot \sin\theta_2 \\ \cos\theta_1 \cdot \cos\theta_2 \end{bmatrix} \qquad (1)$$

respectively, for $\theta_3 = 45°$. The response of the optical filter 10 at a selected output port comprises the magnitude of the coherent sum of the electric fields of the respective degenerated polarised modes, and is given by

$$\left| E_{resultant} \right|^2 = \left| \sum_{i=1}^{4} w_i \cdot e^{j\left(\frac{2n\pi}{\lambda} L_i\right)} \right|^2 \qquad (2)$$

where $w_i$ is the magnitude of the E-field of the $i^{th}$ optical signal tap, $n$ is the average refractive index of the polarised modes, $\lambda$ is the wavelength, of the optical signal and L, is the path length travelled by the $i^{th}$ optical signal tap.

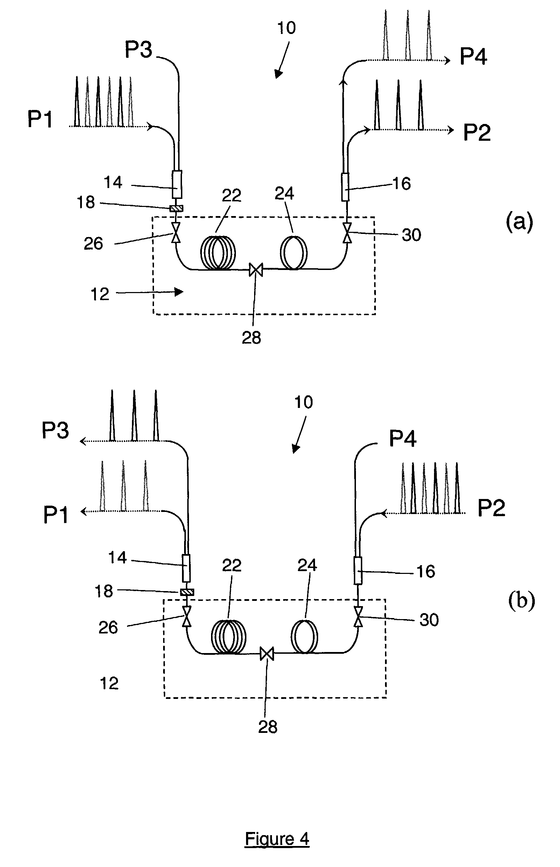

The polarisation of one of the signal taps transmitted to each output port is negated with respect to the other signal taps. The order of occurrence of the negated signal tap is different for the forward and reverse propagation directions. As a result, a non-reciprocal filter response is achieved for the forward and reverse directions between a pair of output ports, for example port 1 and port 2 described above. In addition, complementary filter responses are obtained at the other output port in each direction i.e. port 1 to port 4, and port 2 to port 3. This is illustrated in Figs. 4 (a) and (b). As a result of this complementary output functionality, the optical filter 10 can be utilised as a wavelength de-interleaver/de-multiplexer.

The above analysis extends similarly to port 1 ↔ port 4, port 3 ↔ port 2, and port 3 ↔ port 4.

Different filter responses can be achieved by changing one or both angles $\theta_1$ and $\theta_2$.

Under two special cases, $\theta_1$~45o; $\theta_2$~0o and $\theta_1$~45o; $\theta_2$~90o, the birefringence axes of the first Hi-Bi fibre 22 and the second Hi-Bi fibre 24 are aligned and orthogonal respectively. This reconfigures the optical filter 10 into a 2-tap optical notch filter with maximum tap time interval for the former and minimum tap time interval for the latter.

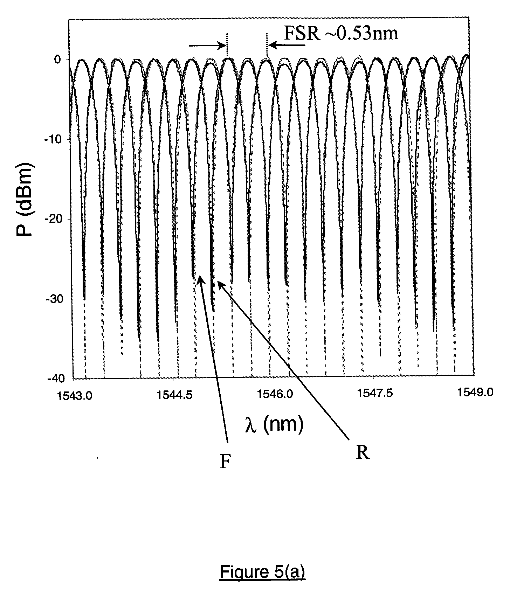

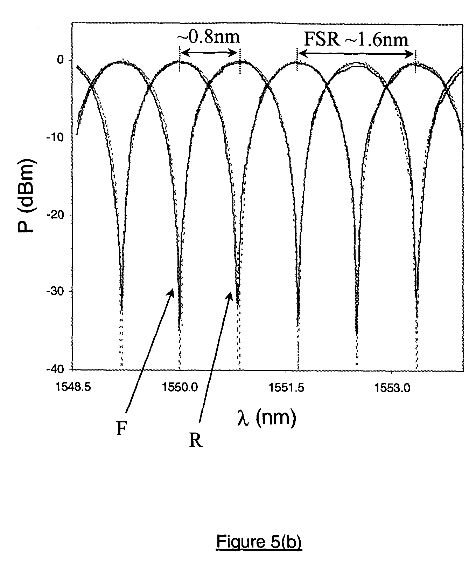

Fig. 5(a) shows the measured forward (F) and reverse filter responses between port 1 and port 2 for the case where $\theta_1$=45o; $\theta_2$=0o. The filter response has a free spectral range (FSR) of ~0.53nm. The FSR of the optical filter 10 is determined by the length and birefringence of the Hi-Bi fibres used. Fig.5 (b) shows the measured forward (F) and reverse (R) filter responses between port 1 and port 2 for the case where $\theta_1$=45o; $\theta_2$=90o. The filter response has an FSR of ~1.6nm. The measured spectra agree well with the simulation results, shown in dotted traces in each figure.

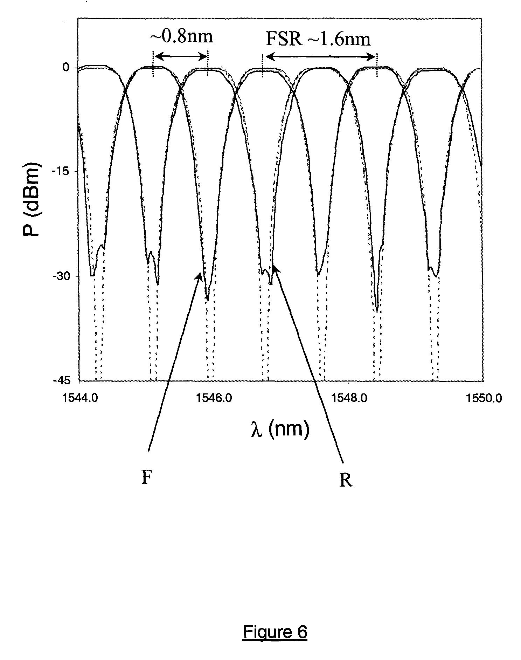

By setting $\theta_1$=15o; $\theta_2$=58o a flattop, passband optical filter response can be achieved. This response is a characteristic feature of a coherent transversal filter consisting of bipolar optical taps. The measured forward (F) and reverse (R) filter responses for $\theta_1$=15o; $\theta_2$=58o are shown in Fig. 6. The filter response has an FSR of ~1.6nm.

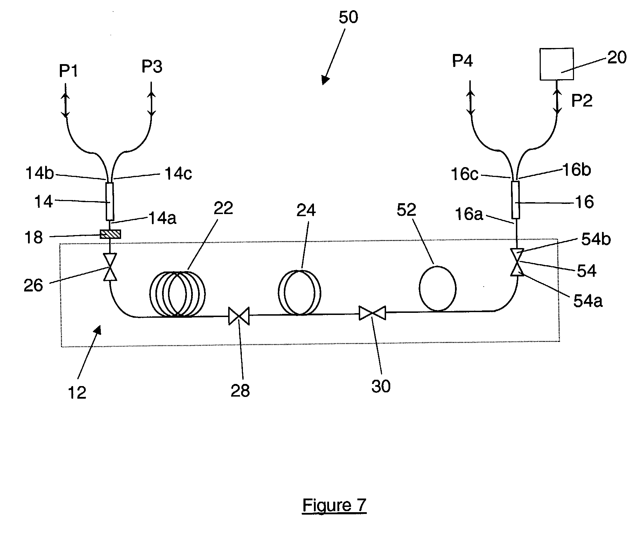

Figure 7 shows a bi-directional, non-reciprocal optical filter 50 according to a second embodiment of the invention. The optical filter 50 is substantially the same as the optical filter 10 according to the first embodiment, with the following modifications. The same reference numerals are retained for corresponding features.

In this embodiment, the optical transversal filter 12 further comprises a third Hi-Bi fibre 52 and a fourth polarisation state controller 54. The third Hi-Bi fibre 52 has a length of 1.125m. The fourth polarisation state controller 54 comprises first and second optical fibre adapters 54a, 54b mounted for translation and rotation relative to one another, to rotate the or each polarisation state of a received optical signal $\theta_4$. The third H-Bi fibre 52 is coupled at one end to the third polarisation state controller 30, being held in its second fibre adapter 30b, and at the other end to the fourth polarisation state controller 54, being held in its first fibre adapter 54a. The fourth polarisation state controller 54 is coupled at its other side to the second polarising beam splitter 16, the fibre pigtail from the common port 16a of the second polarising beam splitter being held in the second fibre adapter 54b of the fourth polarisation state controller 54.

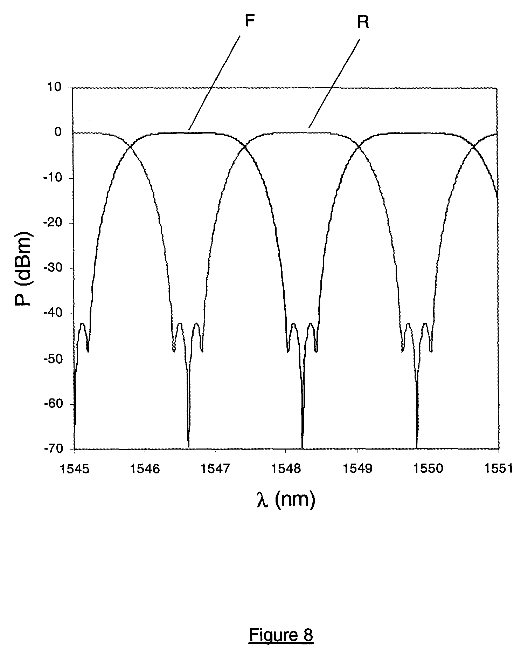

In this example, the angles of polarization rotation of the four polarization state controllers 26, 28, 30, 54 are set at $\theta_1 = \theta_2 = 82°$, and $\theta_3 = \theta_4 = 45°$. The forward (F) and reverse (R) optical filter responses between port 1 and port 2 of the optical filter 50 are shown in Fig.8.

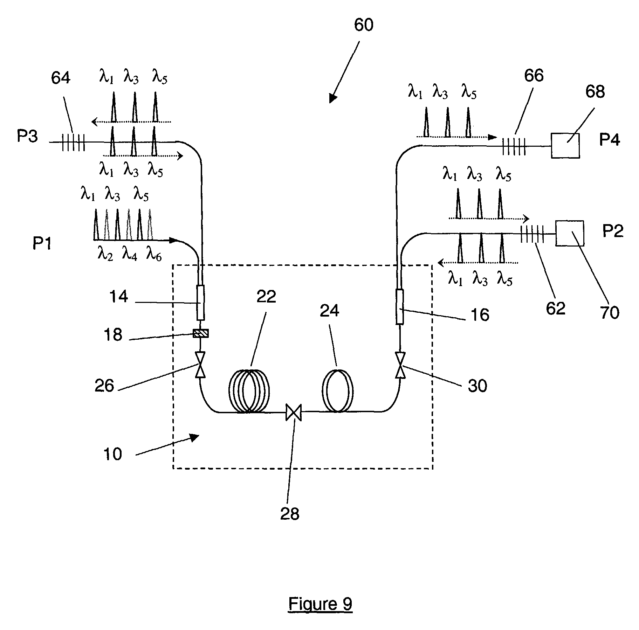

A third embodiment of the invention provides an optical circulator 60, as shown in Fig. 9. The optical circulator 60 comprises a bi-directional, non-reciprocal optical filter according to the first or second embodiments of the invention (an optical filter 10 according to the first embodiment is shown here), first, second and third optical reflectors, in the form of fibre Bragg gratings 62, 64, 66, acting as wavelength selective reflectors, and first and second means for combining a series of optical signal taps, in the form of first and second photodetectors 68, 70. The same reference numerals are retained for corresponding features.

In this example, port 1 of the optical filter 10 forms the input to the optical circulator 60 and port 4 of the optical filter 10 forms the output of the optical circulator 60. The photodetectors 68, 70 are coupled to ports 2 and 4. The first grating 62 is coupled to port 2 of the optical filter 10 and the second grating is coupled to port 3.

As described above, the optical filter 10 has a non-reciprocal filter response between port 1 and port 2, and port 3 and port 4, and a complementary filter response between port 1 and port 3, and port 2 and port 4. As a result, the optical filter 10, when combined with optical reflectors 62, 64 coupled to appropriate ports, operates as wavelength selective 4-port optical circulator. For example, an input optical signal comprising six optical channels having wavelengths $\lambda_1 \lambda_3 \lambda_5$ and $\lambda_2 \lambda_4 \lambda_6$ corresponding to the transmission peaks in the forward and reverse filter responses respectively will undergo the following optical processing, as illustrated in Fig. 9. The wavelength channels $\lambda_1 \lambda_3 \lambda_5$ are transmitted from port 1 to port 2, reflected by the first grating 62, retransmitted from port 2 to port 3, reflected by the second grating 64 and then transmitted from port 3 to port 4. Interleaved wavelength channels $\lambda_2 \lambda_4 \lambda_6$ on the other hand circulate from port 1 to port 4 where they are reflected by the third grating 66, from port 4 to port 3 where they are reflected by the second grating 64, and are then transmitted to output port 2.

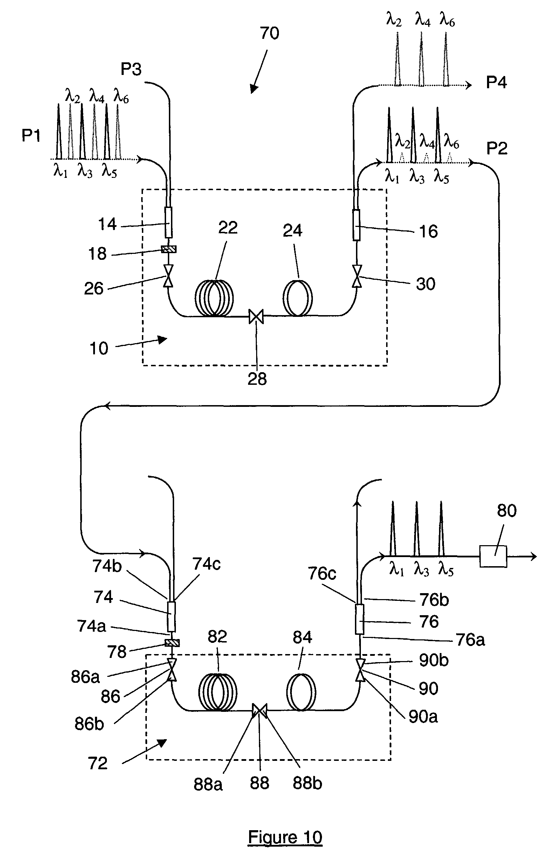

A fourth embodiment of the invention, shown in Fig. 10, provides an optical isolator 70. The optical isolator 70 comprises a bi-directional non-reciprocal optical filter 10 according to the first embodiment of the invention, and the following second stage optical filter components provided between port 2 of the optical filter 10 and its means for combining a series of optical signal taps 80: a second optical waveguide transversal filter 72; third and fourth polarising beam splitters 74, 76, of the same type as the polarisation splitters 14, 16 of the filter 10; and a second fibre pigtailed Faraday rotator 78.

The second optical waveguide transversal filter 72 comprises first and second sections of two polarisation, Hi-Bi optical fibre 82, 84 having lengths of 4.45m and 2.225m respectively. As in the first embodiment shown in Fig.1, the transversal filter 72 further comprises three polarisation state controllers 86, 88, 90 for setting the orientation of the or each polarisation state of a received optical signal at an angle $\theta_1$, $\theta_2$ and $\theta_3$ respectively with respect to the polarisation axes of the subsequent optical component. Similarly to the first embodiment, each polarisation state controller comprises first and second optical fibre adapters, 86a,b, 88a,b, 90a,b respectively.

One end of the first Hi-Bi fibre 82 is coupled to the first polarisation state controller 86, being held in its second fibre adapter 86b, and the other end of the first Hi-Bi fibre 82 is coupled to the second polarisation state controller 88, being held in its first fibre adapter 88a. The second Hi-Bi fibre 84 is coupled at one end to the second polarisation state controller 88, being held in its second fibre adapter 88b, and is coupled at the other end to the third polarisation state controller 90, being held in its first fibre adapter 90a.

The first polarisation state controller is coupled at its other side to one side of the Faraday rotator 78, the fibre pigtail on the Faraday rotator 78 being held in its first fibre adapter 86a. The Faraday rotator 78 is coupled at its other side to the common port 74a of the third polarising beam splitter 74. The third polarisation state controller 90 is coupled at its other side to the common port of the fourth polarising beam splitter 76.

Port 2 (P2) of the optical filter 10 is coupled to the second (slow) port 74b of the third polarising beam splitter 74, such that the output from port 2 becomes the input, via the third polarising beam splitter 74 and the second Faraday rotator 78, to the second transversal filter 72. The means for combining a series of optical signal taps 80 is coupled to the second (slow) port 76b of the fourth polarising beam splitter 76, and forms the output of the isolator 70. Port 1 of the optical filter 10 forms the input to the isolator 70.

In use, an optical signal comprising six optical channels, having wavelengths $\lambda_1 \lambda_3 \lambda_5$ and $\lambda_2 \lambda_4 \lambda_6$, input into the optical isolator 70 will be filtered by the optical filter 10 (less the means for combining a series of optical signal taps 80) as described above in relation to Fig.1. The optical channels having wavelengths $\lambda_1 \lambda_3 \lambda_5$ are routed to port 2, while the interleaved channels having wavelengths $\lambda_2 \lambda_4 \lambda_6$ are routed to port 4. However, the filter response of the optical filter 10 is not perfect, and, as a result, a small percentage of the optical power in the optical channels $\lambda_2 \lambda_4 \lambda_6$ will also be routed to port 2, and vice versa.

The output from port 2 then becomes the input to the second stage optical filter components of the isolator 70, which have the same filter response as the optical filter 10 (less the means for combining a series of optical signal taps 80). As a result, the optical signal output from port 2 is filtered again, and substantially all of the remaining optical power in the interleaved optical channels $\lambda_2 \lambda_4 \lambda_6$ is removed. The final filtered optical signal is then coherently combined in the means for combining a series of optical signal taps 80 to form the output of the isolator 70.

Various modifications may be made to the described embodiments without departing from the scope of the invention. One or more of the optical fibres in the described embodiments may be replaced by planar optical waveguides. By replacing one or more of the Hi-Bi fibres with high birefringence gain fibres, such as polarisation maintaining Erbium doped fibre, the described optical filters perform bidirectional, non-reciprocal wavelength-interleaving amplification without any use of Erbium-doped fibre amplifiers. The described optical circulator and optical isolator can similarly be made to be amplifying.

One or more of the Faraday rotators described may be replaced by integrated fibre technology equivalents, such as that described by Annovazzi-Lodi et al in Journal of Lightwave Technology, number 13, volume 12 [1995], pages 2349-2353. One or more of the polarising beam splitters described may also be replaced by their integrated fibre equivalents, such as the birefringent splittable composite (BISPEC) optical fibre described by Peng et al in Electronics Letters, number 30, volume 8 [1994], pages 666-667.

The optical waveguide transversal filters described may comprise a greater number of Hi-Bi fibre sections, and the sections may have different lengths, or length ratios, to those described. The angles $\theta_1$, $\theta_2$, $\theta_3$ of the polarisation state controllers may be different to those described, the angles being variable to alter the filter response.

One or more of the polarisation state controllers may be replaced by a section of two polarisation, polarisation maintaining optical fibre located within compression apparatus, wherein compression of the fibre causes rotation of the polarisation state of an optical signal propagating through the fibre. One or more of the polarisation state controllers may alternatively comprise a rocking filter. In both of these cases, the sections of Hi-Bi fibre may comprise sections of a single optical fibre. One or more of the polarisation state controllers may alternatively comprise a fusion splice between two sections of fibre, thereby giving a fixed filter response.

In the first and second embodiments, port 3 and port 4 may be used in place of port 1 and port 2, to achieve the same filter response. Port 1 and port 4, or port 3 and port 2 may be used instead to achieve a complimentary filter response to that achieved by using port 1 and port 2 or port 3 and port 4.

The skilled person will appreciate that means for coherently combining a series of optical signal taps, such as the photodetector of Fig.1, will be provided on each port of designated as an output port. The photodetector of Fig. 1 may be replaced by an alternative square-law detector, or other suitable means for coherently combining a series of optical signal taps.

One or more of the fibre Bragg gratings in the described optical circulator may be replaced by an alternative optical reflector, such as a mirror or an optical waveguide loop.

Referring to the optical isolator, the second stage optical filter components may alternatively be provided between port 4 and the means for coherently combining a series of optical signal taps, which would be coupled to the third port 76c of the fourth polarising beam splitter 76. As the skilled person will appreciate, if port 1 remains as the input to the isolator, the use of port 4 will result in a complimentary filter response to that obtained between ports 1 and 2, the isolator thereby passing the interleaved optical channels $\lambda_2$ $\lambda_4$ $\lambda_6$. If port 3 is instead used as the input to the isolator, wavelength channels $\lambda_2$ $\lambda_4$ $\lambda_6$ will be output from port 2, and channels $\lambda_1$ $\lambda_3$ $\lambda_5$ will be output from port 4. The selection of which ports of the third and fourth polarising beam splitters 74, 76 is used is determined by which of ports 1, 2, 3, and 4 is to be coupled to the second stage filter components i.e. is the output of the optical filter 10, and the isolator 70, to be on a fast axis port or a slow axis port.

The skilled person will appreciate that one or more additional filtering stages, comprising the same components as the second stage filter components, may be provided in order to further increase the isolation level of the isolator.

The described embodiments provide various advantages, as follows. Due to the single-line fibre configuration and the absence of use of free space optics, the insertion losses of the optical filters, circulator and isolator is negligible. Since the optical fibres have excellent dispersion characteristics, as compared with the birefringent crystal components used in the prior art, the operation bandwidths of the optical filters, circulator and isolator cover beyond the entire C-band and their wavelength transfer functions (e.g. FSR, passband width) will not be affected or limited by material dispersion.

The described optical filters, circulator and isolator exploit an optically coherent high birefringence fibre transversal filter structure to realize low loss, low dispersion, wavelength interleaved directional isolation with reconfigurable transfer characteristics. Various non-reciprocal transfer responses like notch and flattop bandpass filtering can be configured at ease due to the fibre-based configuration. Interchannel wavelength spacing is simply determined by the length and birefringence of the Hi-Bi fibres used. By adopting Hi-Bi rare-earth doped fibres, the transversal filter configuration enables bidirectional, non-reciprocal wavelength-interleaving amplification without the need to use Erbium-doped fibre amplifier stages. The all-fibre configuration provides low optical loss and low dispersion, and offers ease of reconfiguring the transfer characteristics of the optical filters, circulator and isolator. Truly all-fibre optical filters, circulators and isolators can be achieved.

**Claims**

**1.** A bi-directional non-reciprocal optical filter comprising:

   an optical waveguide transversal filter comprising:

first and second sections of two polarisation, polarisation maintaining optical waveguide having first and second lengths respectively; and

first, second and third polarisation state control means for setting the orientation of the or each polarisation state of a received optical signal at an angle $\theta_1$, $\theta_2$ and $\theta_3$ respectively with respect to the polarisation axes of the subsequent optical component,

the output of the first polarisation state control means being coupled to one end of the first section of waveguide, the second polarisation state control means being coupled between the other end of the first section of waveguide and one end of the second section of waveguide, and the input of the third polarisation state control means being coupled to the other end of the second section of waveguide,

wherein the transversal filter converts an input optical signal into a series of optical signal taps;

first and second polarisation splitters each having on one side a first, common port for optical signals of one or both of first and second orthogonally polarised states, and on the other side a second port for optical signals of the first polarisation state and a third port for optical signals of the second polarisation state,

the first port of the second polarisation splitter being coupled to the output of the third polarisation state control means;

a Faraday rotator coupled between the first port of the first polarisation splitter and the input of the first polarisation state control means; and

means for coherently combining a series of optical signal taps, its input being coupled to one of the second and third ports of the first and second polarisation splitters, and its output forming an output of the optical filter.

2.  An optical filter as claimed in claim 1, wherein each section of two polarisation, polarisation maintaining optical waveguide is of a different length.

3.  An optical filter as claimed in claims 1 or 2, wherein the angles $\theta_1$, $\theta_2$ and $\theta_3$ are variable, in order enable the spectral response of the optical filter to be changed.

4.  An optical filter as claimed in any preceding claim, wherein the two polarisation, polarisation maintaining optical waveguide is a two polarisation high birefringence optical waveguide.

5.  An optical filter as claimed in claim 5, wherein the two polarisation high birefringence optical waveguide is a rare-earth doped two polarisation high birefringence optical waveguide.

6.  An optical filter as claimed in any preceding claim, wherein the means for coherently combining a series of optical signal taps comprises square-law optical detection means, such as a photodetector.

7.  An optical circulator comprising:

a bi-directional non-reciprocal optical filter as claimed in any of claims 1 to 6;

a first optical reflector coupled to one of the second and third ports of one of the first and second polarisation splitters,

the input of the means for coherently combining a series of optical signal taps being coupled to the other one of the second and third ports of said polarisation splitter; and

a second optical reflector coupled to one of the second and third ports of the other one of the first and second polarisation splitters,

the other of the second and third ports of said polarisation splitter forming the input to the circulator.

8.  An optical circulator as claimed in claim7, wherein the optical reflector comprises an optical waveguide grating, such as a fibre Bragg grating, a bulk optic reflector, or a polarisation maintaining optical waveguide loop.

9.  An optical isolator comprising:

a bi-directional non-reciprocal optical filter as claimed in any of claims 1 to 6;
a second optical waveguide transversal filter comprising:

first and second sections of two polarisation, polarisation maintaining optical waveguide having first and second lengths respectively; and
first, second and third polarisation state control means for setting the orientation of the or each polarisation state of a received optical signal at an angle $\theta_1$, $\theta_2$ and $\theta_3$ respectively with respect to the polarisation axes of the subsequent optical component,
the output of the first polarisation state control means being coupled to one end of the first section of waveguide, the second polarisation state control means being coupled between the other end of the first section of waveguide and one end of the second section of waveguide, and the input of the third polarisation state control means being coupled to the other end of the second section of waveguide,

wherein the transversal filter converts an input optical signal into a series of optical signal taps;
third and fourth polarisation splitters each having on one side a first, common port for optical signals of one or both of first and second orthogonally polarised states, and on the other side a second port for optical signals of the first polarisation state and a third port for optical signals of the second polarisation state; and
a second Faraday rotator coupled between the first port of the third polarisation splitter and the input of the first polarisation state control means of the second optical waveguide transversal filter,
one of the second and third ports of one of the first and second polarisation splitters being coupled to a corresponding one of the second and third ports of one of the third and fourth polarisation splitters,
the input of the means for coherently combining a series of optical signal taps of the bi-directional non-reciprocal optical filter being coupled to one of the second and third ports on the other side of the other one of the first and second polarisation splitters or of the other one of the third and fourth polarisation splitters,
and the output of the means for coherently combining a series of optical signal taps forming the output of the isolator.

10. An optical isolator as claimed in claim 9, wherein each section of two polarisation, polarisation maintaining optical waveguide is of a different length.

11. An optical isolator as claimed in claims 9 or 10, wherein the angles $\theta_1$, $\theta_2$ and $\theta_3$ are variable, in order enable the spectral response to be changed.

12. An optical isolator as claimed in any of claims 9 to 11, wherein the two polarisation, polarisation maintaining optical waveguide is a two polarisation high birefringence optical waveguide.

13. An optical isolator as claimed in claim 12, wherein the two polarisation high birefringence optical waveguide is a rare-earth doped two polarisation high birefringence optical waveguide.

Figure 1

Figure 2

Figure 3

Figure 4

Figure 5(a)

Figure 5(b)

Figure 6

Figure 7

Figure 8

Figure 9

Figure 10

**European Patent Office**

**EUROPEAN SEARCH REPORT**

Application Number

EP 03 25 2806

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | YICHENG LAI ET AL: "A novel dual complementary output optical fiber transversal filter for DWDM applications" LEOS 2002. 2002 IEEE/LEOS ANNUAL MEETING CONFERENCE PROCEEDINGS. 15TH ANNUAL MEETING OF THE IEEE LASERS AND ELECTRO-OPTICS SOCIETY (CAT. NO.02CH37369), LEOS 2002. 2002 IEEE/LEOS ANNUAL MEETING CONFERENCE PROCEEDINGS. 15TH ANNUAL MEETING OF THE IEEE L, pages 659-660 vol.2, XP002254548 2002, Piscataway, NJ, USA, IEEE, USA ISBN: 0-7803-7500-9 * abstract * * figure 1 * * page 659, line 19 - line 20 * * page 660, line 1 - line 2 * * page 660, line 3 * * page 659, line 24 - line 25 * * page 660, line 29 - line 30 * * page 659, line 8 - line 10 * --- | 1-13 | H04B10/24 |
| Y | KUOCHOU TAI ET AL: "4-port interleavers, and fully-circulating bi-directional circulators" OPTICAL FIBER COMMUNICATION CONFERENCE. (OFC). TECHNICAL DIGEST POSTCONFERENCE EDITION. ANAHEIM, CA, MARCH 17 - 22, 2001, TRENDS IN OPTICS AND PHOTONICS SERIES. TOPS. VOLUME 54, WASHINGTON, WA: OSA, US, vol. 1 OF 4, 2001, pages MK51-MK54, XP010546045 ISBN: 1-55752-655-9 * page 2, paragraph INTRODUCTION * * figure 2 * * page 2, line 38 - line 44 * --- | 1-6 | TECHNICAL FIELDS SEARCHED (Int.Cl.7) G02B H04B |
| | -/-- | | |

The present search report has been drawn up for all claims

| Place of search | Date of completion of the search | Examiner |
|---|---|---|
| MUNICH | 19 September 2003 | Orignac, X |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

23

**European Patent Office**

**EUROPEAN SEARCH REPORT**

Application Number

EP 03 25 2806

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | TAI K ET AL: "WAVELENGTH-INTERLEAVING BIDIRECTIONAL CIRCULATORS" IEEE PHOTONICS TECHNOLOGY LETTERS, IEEE INC. NEW YORK, US, vol. 13, no. 4, April 2001 (2001-04), pages 320-322, XP001100790 ISSN: 1041-1135 * page 320, column 1, line 25 - line 28 * * figure 2 * * page 321, column 1, line 15 - line 17 * * page 321, column 2, line 12 - line 14 * --- | 7-13 | |
| A | TAJIMA K: "ER3+-DOPED SINGLE-POLARISATION OPTICAL FIBERS" ELECTRONICS LETTERS, IEE STEVENAGE, GB, vol. 26, no. 18, 30 August 1990 (1990-08-30), pages 1498-1499, XP000108664 ISSN: 0013-5194 * the whole document * ----- | 5,13 | |
| | | | TECHNICAL FIELDS SEARCHED (Int.Cl.7) |

The present search report has been drawn up for all claims

| Place of search | Date of completion of the search | Examiner |
|---|---|---|
| MUNICH | 19 September 2003 | Orignac, X |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)